# EUROPEAN PATENT SPECIFICATION

(11) **EP 1 678 967 B1**
(45) Date of publication and mention of the grant of the patent: **13.04.2011**
(21) Application number: 04765892.7
(22) Date of filing: 08.10.2004
(51) Int. Cl.: H04W 88/06, H04W 84/10

(54) **MOBILE-TERMINAL GATEWAY**
MOBIL-ENDGERÄT-GATEWAY
PASSERELLE DE TERMINAL MOBILE

(30) Priority: 10.10.2003 US 510558 P; 10.10.2003 US 510578 P; 27.05.2004 US 857320; 27.05.2004 US 857522
(43) Date of publication of application: 12.07.2006
(73) Proprietor: Telefonaktiebolaget LM Ericsson (publ), 164 83 Stockholm (SE)
(72) Inventor: BALACHANDRAN, Kumar, Cary, NC 27511 (US); WESSLEN, Anders, SE-245 42 Staffanstorp (SE)
(74) Representative: Akerman, Marten Lennart
(86) International application number: PCT/EP2004/011261
(87) International publication number: WO 2005/046271

(56) References cited:
- WO-A-98/29975
- US-A1- 2003 143 973
- "The Intel Personal Internet Client Architecture" WHITE PAPER, September 2001 (2001-09), XP002251759

## Description

### BACKGROUND OF THE INVENTION

### TECHNICAL FIELD

The present invention relates generally to a mobile-terminal architecture and, more particularly, but not by way of limitation, to a mobile-terminal architecture that employs a gateway that uses a functional split between access and application functionalities.

### HISTORY OF RELATED ART

In the future, mobile terminals are expected to continue to increase in capability in terms of both functionality and applications supported. Mobile terminals include, for example, cellular telephones, personal digital assistants (PDAs), and other personal handheld computers. Over time, the cellular telephone has tended to converge with the personal computer (PC). One significant impact of this convergence is the need for mobile terminals to become more expandable in the kind of hardware that a network can interface to and in software that may be run on the mobile terminal.

There are two primary views about architecting third-generation (3G) mobile terminals. The first is a computer-centric one, in which access to a cellular network is a peripheral function and emphasis is given to an application platform as the center of an architecture of the mobile terminal. In the computer-centric view, the presence of the cellular network is an afterthought, a mere added functionality to a personal handheld computer.

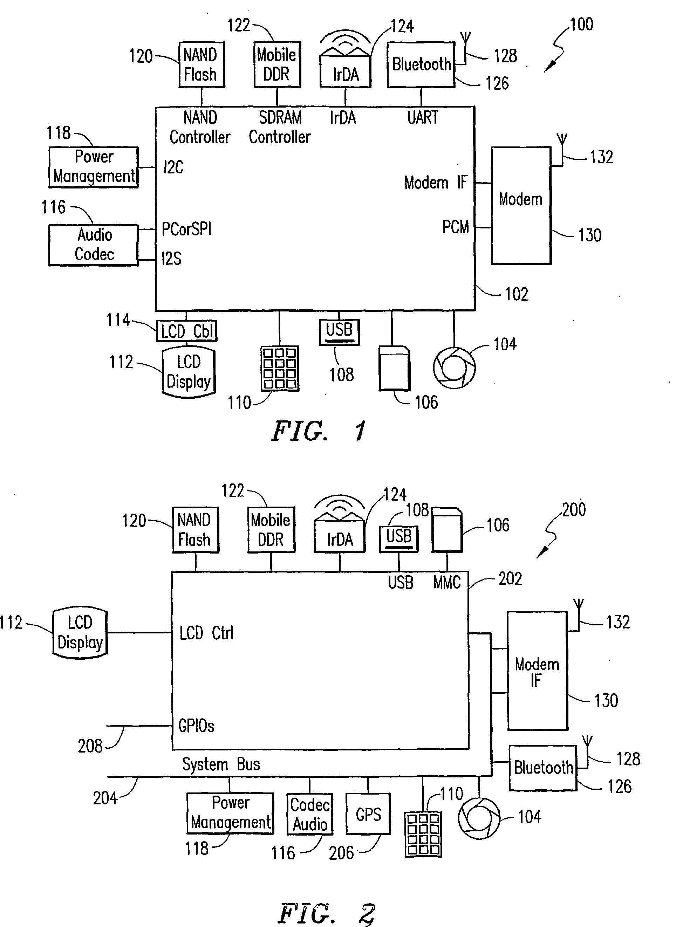

FIGURE 1 is an illustration of a current typical computer-centric view of a mobile-terminal architecture as seen from a hardware perspective. In FIGURE 1, a mobile terminal architecture 100 includes a mobile terminal 102 that includes various interfaces to external devices and components. The mobile terminal 102 includes an interface to a camera 104, a generic multimedia device 106, a USB device 108, a keyboard 110, and an LCD display 112 (via an LCD controller 114). Also shown connected to the mobile terminal 102 is an audio codec 116, which is connected via a PC or SPI interface and an i2S interface. In addition, the mobile terminal 102 interfaces with a power management block 118 via an i2C interface.

A NAND flash memory 120 is controlled by a NAND controller of the mobile terminal 102. The mobile terminal 102 also controls a mobile double data rate (DDR) memory 122 via an SDRAM controller. An IrDA 124 is controlled by an FlrDA of the mobile terminal 102, while a BLUETOOTH module 126 is connected to a UART of the mobile terminal 102. An antenna 128 serves the BLUETOOTH module 126. The mobile terminal 102 is also connected to a modem 130 via a modem interface of the mobile terminal 102. An antenna 132 serves the modem 130.

The mobile terminal architecture 100 is computer-centric, meaning that the various external devices and components connect to the mobile terminal 102 via a variety of interfaces in a fashion similar to that currently employed by PCs. The mobile terminal 102 is an example of a computer-centric mobile terminal presented by an industry alliance known as the Mobile Industry Processor Interface (MIPI) Alliance.

FIGURE 2 illustrates a possible future system-bus-oriented computer-centric view of a mobile terminal architecture as seen from a hardware perspective. In FIGURE 2, a mobile terminal architecture 200 includes a mobile terminal 202. The mobile terminal architecture 200 is different from the mobile terminal architecture 100 in one major respect, that being inclusion of a system bus 204. The system bus 204 may be used to connect a plurality of external devices to the mobile terminal 202. Thus, the mobile terminal architecture 200 may be termed a system-bus-oriented computer-centric architecture.

The system bus 204 is shown connecting the mobile terminal 202 to the modem 130, the BLUETOOTH module 126, the camera 104, the keyboard 110, the power management block 118, and a global positioning system (GPS) module 206. Also shown connected to the mobile terminal 202 are the NAND flash memory 120, the mobile DDR 122, the IrDA 124, the USB device 108, and the generic multimedia device 106. In addition, general purpose input/output (GPIOs) 208 are illustrated as part of the mobile terminal 202.

The system bus 204 serves to make the architecture 200 even more like a PC than the mobile terminal architecture 100; indeed, the architecture 200 represents the computer industry's view of an evolution path for mobile telephones. In particular, interfaces handled by the mobile terminal 202 (e.g., the USB 108) and the interfaces handled by the system bus 204 (e.g., the camera 104) are still organized in a computer-centric fashion. The architecture 200 may be used to create a delineation between various component manufacturers, thus exploiting synergies of cooperation and allowing industry partners to lower costs.

"The Intel Personal Internet Client Architecture", White Paper, September 2001, XP 002251759 describes a personal Internet client architecture for wireless Internet clients. The architecture is described as including an applications subsystem software architecture consisting of platform services, operating system and services, middleware, and applications. The architecture is further described as including a communication subsystem to provide the applications subsystem the services to access cellular wireless networks that are independent of the physical medium.

U.S. Patent Application No. 2003/143973 discloses a wireless mobile communication device. The device includes a first processor with which software applications are configured to operate. The device further includes a second processor configured to manage wireless communication operations and a communication link between the first and the second processors. A reliable communications protocol is used for communications between the first and second processors via the communication link to ensure that data sent from either one of the processors is received by the other processor.

WO98/29975 A2 discloses a mobile terminal that includes an access subsystem that gives access to a plurality of networks. A selection is made in the access subsystem of the network that is most adapted to transmit data of an application.

### SUMMARY OF THE INVENTION

The invention includes a mobile terminal as disclosed in claim 1 and a wireless access method as disclosed in claim 21.

### BRIEF DESCRIPTION OF THE DRAWINGS

A more complete understanding of the present invention may be obtained by reference to the following Detailed Description of Exemplary Embodiments of the Invention, when taken in conjunction with the accompanying Drawings, wherein:
FIGURE 1 is an illustration of a current typical computer-centric view of a mobile-terminal architecture as seen from a hardware perspective;
FIGURE 2 illustrates a possible future system-bus-oriented computer-centric view of a mobile terminal architecture as seen from a hardware perspective;
FIGURE 3 illustrates a network-centric view of interaction between a mobile-terminal user and various networks in accordance with a gateway architecture;
FIGURE 4 illustrates an exemplary mobile terminal in accordance with the gateway architecture; and
FIGURE 5 illustrates a wireless network that includes a server and gateway operating in a personal area network.

### DETAILED DESCRIPTION OF

### EXEMPLARY EMBODIMENTS OF THE INVENTION

Embodiment(s) of the present invention will now be described more fully with reference to the accompanying Drawings. The invention may, however, be embodied in many different forms and should not be construed as limited to the embodiments set forth herein. The invention should only be considered limited by the claims as they now exist and the equivalents thereof.

Advances in wireless technology and computing have led to an increasing need to connect personal devices with each other or to the outside world. For example, laptop computers, personal digital assistants (PDAs), cameras, accessories, and personal-entertainment devices are all devices that are vying for access to the Internet in primarily four spheres of the user's life. The four spheres are: 1) play; 2) work; 3) home; and 4) on the move. There is also a need to synchronize information in the mobile terminal to, for example, PDAs or personal information management (PIM) servers on a desktop personal computer or on the Internet.

In contrast to the mobile-terminal architectures illustrated in FIGURES 1 and 2, a mobile-terminal architecture that does not assume any prescribed separation between handled interfaces possesses certain advantages. In a mobile terminal gateway architecture, a communications (i.e., access) subsystem and a peripheral subsystem of the mobile terminal are separated from an application subsystem, including an application processor, in a uniform way. The separation is consistent with, for example, basic protocols that underlie the Internet, and makes possible a distributed architecture for the mobile terminal. The gateway architecture allows a uniform separation between application functionality and access functionality of the mobile terminal to be made, while also making possible a personal area network (PAN) for multiple devices that may be carried by the user. In various embodiments of the invention, the mobile-terminal architecture is not viewed as a set of hardware modules that need to inter-operate with one another. Rather, in various embodiments of the invention, it is recognized that adding multiple communication interfaces to the architecture of a mobile terminal results in the ability to communicate being central to distribution of functionality.

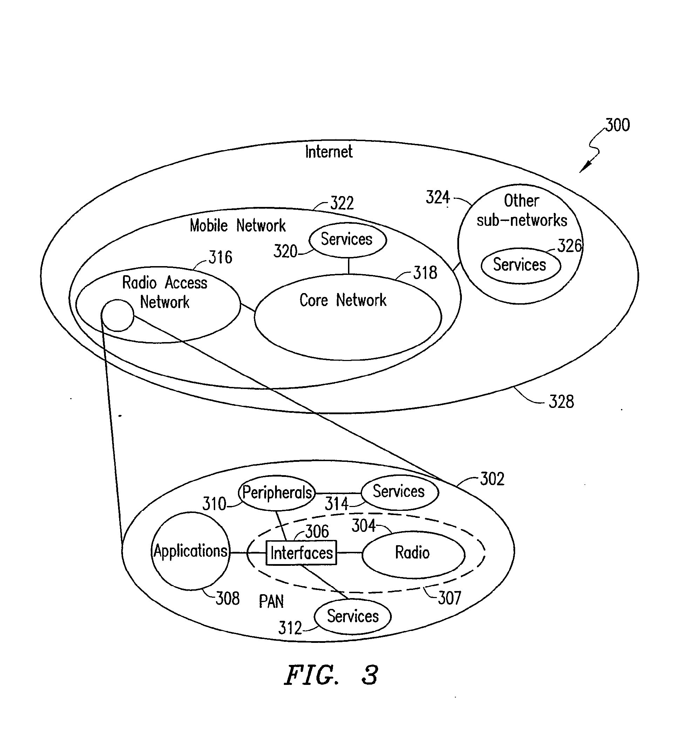

FIGURE 3 illustrates a network-centric view of interaction between a mobile-terminal user and various networks in accordance with the gateway architecture. The view 300 includes a PAN 302 that represents the so-called personal space of the mobile-terminal user. For example, the PAN may be represented by an area of approximately 10 meters in radius surrounding the mobile terminal. The PAN 302 includes a radio part 304 of a mobile terminal of the user. Connected to the radio part 304 are a plurality of interfaces 306. The interfaces 306 and the radio part 304 together form an access subsystem 307. A mobile terminal operating in the PAN 302 includes the application subsystem 308 and the access subsystem 307. The interfaces 306 interconnect one or more of the radio part 304, the application subsystem 308, peripherals 310, and services 312 that are accessible from within the PAN 302. Also shown are services 314 accessible via the interfaces 306 and the peripherals 310.

The PAN 302 is part of a radio access network 316. The radio access network 316 is connected to a core network 318. The core network 318 permits access to core network services 320. The radio access network 316, which includes the PAN 302, and the core network 318 are part of a mobile network 322. The mobile network 322 is connected to other subnetworks 324, which include various services 326. The mobile network 322 and the other subnetworks 324 are part of the Internet 328. The PAN 302, the radio access network 316, the mobile network 322, and the Internet 328 represent ever-increasing circles of functional interaction between the mobile-terminal user and the mobile-terminal user's environment.

The application subsystem 308 and the peripherals 310 may access other entities via the access subsystem 307, which acts as a router or gateway. The other entities may be within the PAN 302, the radio access network 316, the mobile network 322, or the Internet 328.

Unlike prior approaches, a wireless network (e.g., the PAN 302) is the center of the gateway architecture and applications (either on the application subsystem 308 or on the peripherals 310) are participants in interactions of the user via the wireless network with intelligence in the form of services or other users. The mobile-terminal user's connection with the wireless network may thus be seen as arising out of ever-increasing circles of influence. The network-centric view 300 has profound implications for the software and hardware architecture of mobile terminals that employ the gateway architecture.

The gateway architecture enables manufacture of a mobile terminal that is, in effect, a router in the mobile network 322. The mobile terminal serves as a hub for the PAN 302 and provides the mobile-terminal user with flexibility to route information between various applications and personal devices or peripherals and the mobile network 322, both within and external to the PAN 302 and/or the mobile network 322.

The gateway architecture capitalizes on a separation between the application subsystem 308 and the access subsystem 307. An access-application separation, which may also be referred to as a functional split, is discussed in a U.S. patent application entitled Method of and System for Scalable Mobile-Terminal Platform System, filed on the same date as this patent application and bearing Docket No. 53807-00084USPT.

Third-generation access technologies provide a service infrastructure for both the mobile terminal and for other devices. Many services yield higher quality when accessed from more-capable devices; for example, services that benefit from a more capable device include streaming audio and streaming video. The PAN 302 offers the same service to all devices connected to the PAN. In addition, services on each device can be easily distributed to all other PAN 302 devices. The PAN 302 is also scalable. The functionality of the gateway depends on the number of devices that can connect to the PAN 302 (i.e., the number of interfaces available) and on the gateway's capacity. The smallest configuration only has one device and the access subsystem 304 as nodes of the PAN 302. The device can either be the application subsystem 308 or another device (e.g., in a telematics solution). In a larger configuration, the PAN 302 may be limited only by the capacity (i.e., packets/s) of the access subsystem 307.

The gateway architecture results in an architecture that is very different from that of either of FIGURES 1 or 2. In accordance with the gateway architecture, the access-application separation is, in essence, a separation between access functionality and application functionality. The gateway architecture employs distributed-processing concepts and a network-centric view of the mobile terminal.

If a separation of the access functionality and the application functionality is implemented in two separate processors, the access subsystem 307 may handle common access (i.e., communication) services and the application subsystem 308 may handle end-user needs in a flexible and upgradeable fashion. Splitting the application functionality and the access functionality is intended to achieve the following: 1) isolation of functionality and consequent optimization of design of the access subsystem 307 and the application subsystem 308; 2) mobile-terminal versatility at a small increase in cost, such that the application subsystem 308 can, for example, scale with applications used by the mobile terminal and the access subsystem 307 can, for example, scale with network-access capabilities of the mobile terminal; and 3) enhanced control over access functionality to a mobile-terminal-platform developer.

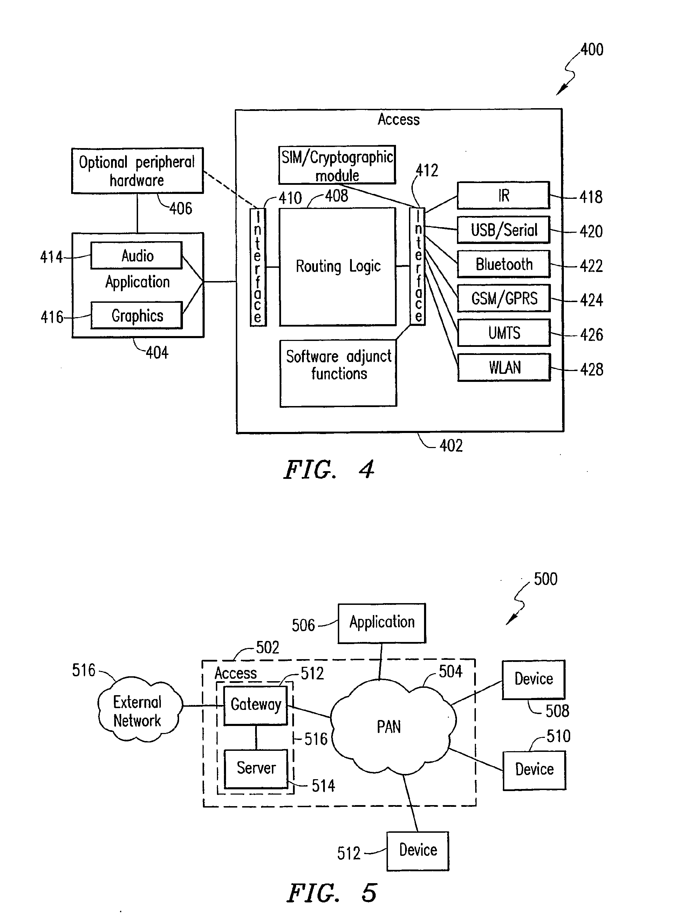

FIGURE 4 illustrates an exemplary mobile terminal in accordance with the gateway architecture. The mobile terminal 400 includes an access subsystem 402, an application subsystem 404, and optional peripheral hardware 406. The access subsystem 402 serves as a gateway that allows a user of the mobile terminal 400 to access the application subsystem 404, the optional peripheral hardware 406, as well as any other devices within the PAN 302 of the mobile-terminal user. The application subsystem 404 includes an audio interface 414 and a graphics interface 416. The access subsystem includes routing logic 408, an interface 410 to the application subsystem 404, and an interface 412 to various access-technology interfaces. The various access-technology interfaces include IR 418, USB/serial 420, BLUETOOTH 422, GSM/GPRS 424, UMTS 426, and WLAN 428.

In contrast to FIGURE 4, in a traditional view of separation of duties within a mobile terminal, an access functionality is, in effect, merely a modem serving an application functionality. FIGURES 1 and 2 represent variations of the traditional view. The traditional view comes from the PC world (e.g., operating system (OS) manufacturers and application developers), in which the modem is treated as a peripheral slaved to the PC. In contrast to the traditional view, the gateway architecture permits network access devices to be built that may be integrated with application engines for various devices. The access subsystem 402 provides added value to device developers and provides a more-optimized connectivity solution than that of a mere modem.

In addition to the application subsystem 404, which is typically integrated into the mobile terminal 400, other devices within the PAN 302 may also obtain access, via the access subsystem 402, to external networks (e.g., the Internet). In the gateway architecture, the application subsystem 404 and all other devices that can connect to the PAN 302 can access services in the access subsystem 402, or in other connected devices via the access subsystem 402. Within the PAN 302, the access subsystem 402 routes data to the proper receiving device or serves requests for services from devices in the PAN 302. Devices may also be connected via the access subsystem 402 to the external world via various standard wireless technologies, such as, for example, UMTS, GSM/GPRS, EDGE or W-LAN. In various implementations of the gateway architecture, the only major difference between the application subsystem 404 and the other devices (e.g., the optional peripheral hardware 406) connected to the PAN 302 is that the application subsystem 404 is typically integrated into the mobile terminal 400 itself and uses a different interface (i.e., hardwired) to the access subsystem 402.

The application-access functional split need not be a purely hardware split, although mobile terminals using the gateway architecture may have a physical separation of computing resources for application services and access services on separate processors. The split between access functionality and application functionality allows the application subsystem 404 and the access subsystem 402 to complement each other and to borrow from each other's functionality. In addition, functional interfaces between applications and services in various components of the PAN 302 may be defined so as to allow uniformity of access, regardless of whether the various components are separated as software processes, hardware components in the mobile terminal 400, or hardware devices completely removed from the mobile terminal 400.

FIGURE 5 illustrates a wireless network that includes a server and gateway operating in a personal area network. A network 500 includes an access subsystem 502 including a PAN 504 connected to an application subsystem 506 and external devices 508, 510, and 512. The access subsystem 502 includes a gateway 512 and an access server 514. The access server 514 is the access point for access-subsystem services and may be accessed by any entity within the PAN 504 seeking the services housed thereon. The gateway 512 and the access server 514 are shown as included within a box 516, since the gateway 512 and the access server 514 are typically logical entities implemented in the same physical entity. A mobile terminal includes the access subsystem 502 and the application subsystem 506. The gateway 512 permits user access to an external network 516 by any of the application subsystem 506 or the devices 508, 510 or 512.

The access subsystem 502 provides a networking hub for access via the PAN 504 to external networks as well as a router for the PAN 504. In some mobile terminals employing the gateway architecture, the application subsystem 506 is considered just another device on the PAN 504, as illustrated in FIGURE 5. In other mobile terminals that employ the gateway architecture, an application subsystem and an access subsystem together form a PAN gateway, and remote devices (i.e. devices external to the mobile terminal) are viewed identically from the perspective of the PAN gateway. In either case, access-subsystem services are accessible via an access server over the relevant PAN.

Communications within a PAN may occur via TCP/IP, as TCP/IP offers a standard communication interface, most operating systems providing a socket application programming interface (API). Building services on top of the socket API permits the services to be device and operating-system independent. Because the gateway architecture may be made application-operating-system independent, communications with services are not necessarily dependent on the application operating system used. Thus, a gateway may be built on facilities that most operating systems are likely to support, such as, for example, a socket API. However, if an application operating system determines that a socket API is for some reason insufficient, the application operating system may, if design constraints dictate, determine how the pertinent functionality is to be implemented and rule out a socket API implementation.

For example, a real-time operating system from ENEA, called OSE, provides mechanisms for inter-process communications using message-passing constructs such as signals, semaphores, and shared memory. Thus, in a platform that uses a single processor to implement application functionality and access functionality, or in a mobile terminal that uses a plurality of processors all running OSE, the socket API could be bypassed and an entire functional separation implemented using low-level operating-system constructs. Various embodiments of the invention aim to encourage standardized interfaces that permit low-level calls to be abstracted via a socket API to the low-level calls. Thus, in various embodiments of the invention, a standard socket API may be mapped to a proprietary protocol family that interfaces to inter-processor communication facilities. In addition, in various embodiments of the invention, the standard socket API may be mapped into another link layer such as, for example, one provided by a specialized serial link such as the MSL or a profile based on a non-IP one provided by, for example, BLUETOOTH. Further, in various embodiments of the invention, the socket API may communicate with server functions that can, in turn, set up non-IP routing protocols for some kinds of traffic, such as, for example, voice for telephony. In various embodiments of the invention, a functional separation between access functionality and application functionality does not depend upon conventional views of the particular ways in which the functionalities are implemented via hardware and/or software.

Under circumstances in which most external networks that the access subsystem can connect to are based on TCP/IP, use of TCP/IP for a PAN is a logical choice. Under most circumstances, use of a non-IP-based solution requires some type of access-subsystem translation gateway. A TCP/IP stack is often implemented in devices such as, for example, laptops and PDAs.

If IP is to be used for communications within a PAN, one of the major problems with IPv4 is the diminishing availability of addresses. Network Address Translation (NAT), Internet Connection Sharing (ICS), or masquerading under Linux commonly solves the shortage of IPv4 addresses. NAT allows a private network to share a single external IP address. The internal network uses non-routable IP addresses as are specified in IETF RFC 1918. In its simplest form, NAT merely translates IP addresses; however, the simplest form of NAT is seldom implemented. The most common form of NAT is officially termed NAT with port translation (NATPT). In NATPT, translation is enabled of IP addresses and port addresses between internal and external networks.

Despite the above, some applications need an end-to-end connection, which NAT breaks. One common way of solving this problem is to use application-level gateways (ALGs), which parse incoming packets and re-package content and send the repackaged content to its destination. The ALGs are tailored for each application (e.g., FTP) and must be implemented in the gateway. The complexity and resource requirements of an ALG depend on the application. In addition, Quality of Service (QoS) for different packet data protocol (PDP) contexts cannot be handled in an IP communication. To sort packets to different PDP contexts, packet filtering is needed in the gateway.

Prioritization of data transport may be altered via use of QoS provisioning. At lower levels, interfaces such as Intel's MSL provide the ability to alter QoS on several logical channels carried over one hardware interface. At higher levels, modem operating systems provide facilities such as Microsoft's Generalized Quality of Service (GQoS) or standardized protocols such as the Resource Reservation Protocol (RSVP), which may be used to manage prioritization of data support. In practice, several fixed QoS profiles are typically attached to each available logical channel and application requirements are mapped to the best available profile. Data and control links may be similarly differentiated.

The address-space issue present when IPv4 is used is not a problem with IPv6. In IPv6, addresses are 128 bits instead of 32 bits, which means that there are a sufficient number of addresses to let each device have its own global IP address. Thus, when the gateway is connected to the external network, the gateway obtains a sub-net of global addresses for the internal network. With global addresses, the NAT and the ALGs are no longer required.

However, when an IPv6 PAN is implemented, external access may still be an IPv4 connection. There are at least two options to solve the connections to the external network: 1) use of a NAT/ALG solution; 2) tunneling the IPv4 traffic over the PAN. The first solution is discussed above. The second solution has the disadvantage that only one node of the PAN can connect to the external network at a time.

With IPv6, there is no need for a dynamic host control protocol (DHCP) server in the PAN, as the local IPv6 network implements stateless auto-configuration. In addition, when IPv6, rather than IPv4, is used, the access subsystem tends to be more independent of the application subsystem, as there is no need for implementing application-specific ALGs. Moreover, IPv6 adds quality-of-service (QoS) capabilities, so senders can request, and devices can apply, special handling to different kinds of traffic. Making QoS information explicit helps routers process packets more quickly, making it easier, for example, to give real-time multimedia higher QoS than default, while simple file transfers might get even lower QoS. While basing the PAN 302 on IPv6 possesses certain advantages discussed above, the PAN may be based on any suitable protocol.

An example of an advantage of the gateway architecture is when an access subsystem provides voice compression functionality for telephony and multimedia. An application developer need not repeat the voice compression functionality if the compression library on the access subsystem is available as a functional interface to the application subsystem or other devices in the PAN. Thus, useful parts of the access subsystem may be exposed to the application subsystem and other devices in the PAN, such as, for example, (e.g., a voice memo application) without significant software development.

As another example, an advanced application subsystem may be capable of some of the networking functionality that the access subsystem typically provides. Thus, a functional component such as DHCP may actually be removed from the access subsystem and migrated to the application subsystem, while exposing the functionality within the access environment.

As another example, the GSM specification requires the use of a Subscriber Identity Module (SIM) to store subscriber-specific information that allows migration of information such as, for example, subscriber identity and phonebook data from one terminal to another. The exposure of specific functional interfaces towards the SIM allows more sophisticated personal information databases on an application subsystem to be synchronized on a real-time basis with an access subsystem.

As another example, advanced mobile devices such as smart phones or PDAs may have a focus towards gaming and other multimedia applications. The gateway architecture allows migration of hardware interfaces, such as audio or graphics, outside of an access subsystem, so that the gateway architecture can easily be scaled. Thus, the access subsystem implemented using a baseband processor with rudimentary graphics and audio functionality meant for basic cellular phones may be used along with more advanced application environments in a way that allows the multimedia peripheral functionality to be migrated to access a new application environment.

Middleware services that permit application developers to access both an application subsystem and an access subsystem may be exported via a set of interfaces and related functionality termed an Open Platform API (OPA). The OPA is, in turn, part of an overall middleware block (not shown) separating third-party application software from platform services software (i.e., application subsystem software and access subsystem software). The OPA represents platform functionality that customers can use to develop applications. The OPA functionality relies on an execution model introduced in the middleware block.

When a standard operating subsystem is used by an application subsystem, the OPA may implement communications for access-subsystem functionality via a socket API, which can be used to hide proprietary methods, such as, for example, operating-system-specific inter-process communication facilities such as, for example, link handlers in OSE or non-TCP/IP protocol families associated with other types of link layer protocols. Within each of the application subsystem and the access subsystem, process communications may be based on the link handler. Applications built on top of the OPA see no difference between the application subsystem and the access subsystem.

For external operating systems loaded on the application subsystem, only the access functionality of the OPA may be supported in an effort to minimize external operating system support. In such cases, the OPA may be modified for each different application operating system or a description of how to access the access services over the sockets API may be provided. The choice is between a functional interface (i.e., OPA) or a message-based interface (i.e., sockets). Software control and configuration of the access subsystem and the application subsystem may be performed by a sockets based interface. For example, an SNMP/TCP/IP-based access may be provided.

An access subsystem can scale from a low-end to a high-end device. The access subsystem typically scales with three parameters: 1) the number of external interfaces; 2) the throughput (packets/s); and 3) the services the access subsystem provides. If an IP solution is used, a TCP/IP stack may be located on both the access subsystem and the application subsystem. If a PAN is based on IPv6, the devices connecting to the PAN may not need to implement both IPv4 and IPv6; however, whether IPv4 support is needed depends on how a possible external IPv4 connection will be handled.

Telematics solutions are used when connectivity is added to embedded devices, such as, for example, automotive systems or beverage machines. The gateway architecture provides a self-contained access subsystem with a standard interface and protocol to access the access subsystem. The choice of interface can be any of the external interfaces supported by the access subsystem.

As described above, the gateway may be implemented so that the application subsystem is viewed as merely another device among others in the PAN 302. When the application subsystem is so viewed, services that depend on the real-time aspects of the IP stack may suffer performance degradation. One potential example is delivery of audio data between the access subsystem and the application subsystem. In order to achieve sufficient performance, the IP stack needs to possess acceptable throughput, latencies, and variations in the latencies.

One way to avoid potential performance degradation of the services that depend on real-time aspects of the IP stack is to tie the application subsystem more tightly to the access subsystem. In such a case, the application subsystem is no longer viewed merely as another node in the PAN. Rather, in the audio-data example mentioned above, a special audio data path can be established via a direct channel over a logical interface between the application subsystem and the access subsystem and only control transmitted over IP. The application subsystem is thus treated differently than other devices connected to the PAN. In such a case, if the application subsystem is not treated differently than the other devices, the access subsystem supports the direct channel for every supported external interface.

An extreme of tighter integration between the access subsystem and the application subsystem is when the access subsystem and the application subsystem together form the gateway and communications therebetween occur via a specialized protocol, such as, for example, the link manager in OSE. A PAN then includes the mobile terminal as one node and other devices connected through external interfaces of the mobile terminal as other nodes. Another option is to optimize a communications channel between the gateway and the PAN devices by, for example, removing the IP stack and implementing a socket API directly about the external interface. Thus, there will be one implementation for each of the external interfaces.

In contrast to the tighter integration discussed above, when the application subsystem is viewed by the gateway as merely another device in a PAN, any device that can connect, to the PAN may be considered the application subsystem of the mobile terminal. The PAN may, but need not necessarily, be based on the IP protocols. The access subsystem forms a self-contained access device whose services may be accessed via, for example, the socket API.

The previous Description is of embodiment(s) of the invention. The scope of the invention should not necessarily be limited by this Description. The scope of the present invention is instead defined by the following claims.

## Claims

1. A mobile terminal comprising:
an access subsystem (307), the access subsystem (307) comprising at least one access-technology interface (306),
an application subsystem (308) inter-operably connected to the access subsystem (307), the connection including the at least one access technology interface (306) associated with the access subsystem (307);
wherein the application subsystem (308) and the access subsystem (307) are separated via a functional split;
wherein the access subsystem (307) is adapted to provide access by the application subsystem (308) to a first wireless network via a first access-technology interface of the at least one access-technology interface (306) **characterized in that** the access subsystem includes an interface (412) to a plurality of access-technology interfaces (418, 420, 422, 424, 426, 428) and that the access subsystem is adapted to operate as a gateway providing access to devices of a personal area network and to provide to said devices access to at least the plurality of access-technology-interfaces and or the application subsystem.

2. A mobile terminal according to claim 1, further comprising a plurality of service components (312, 314), each of the plurality of service components (312, 314) being inter-operably connected to at least the access subsystem (307);
wherein at least one of the plurality of service components (312, 314) is adapted to provide access to functionality required by the access subsystem (307) and the application subsystem (308).

3. The mobile terminal of claim 1, wherein programming access to the application subsystem (308) and the access subsystem (307) is permitted via middleware.

4. The mobile terminal of claim 1, wherein at least one of the plurality of service components (312, 314) comprise one of separable hardware modules,
separable software modules, and
a combination of hardware components and software components.

5. The mobile terminal of claim 1, wherein communications between the access (307) subsystem and the application subsystem (307) occur via the Internet Protocol.

6. The mobile terminal of claim 1, wherein the access subsystem (307) is adapted to serve as a wireless router that is adapted to connect at least one external device (310) inter-operably connected to the access subsystem (307) to a second wireless network.

7. The mobile terminal of claim 6, wherein the application subsystem (308) and the at least one external device (310) are inter-operably connected to one another via the access subsystem (307).

8. The mobile terminal of claim 1, wherein the access subsystem (307) and the application subsystem (308) are adapted to communicate via a sockets-based interface.

9. The mobile terminal of claim 8, wherein a link-specific address and protocol family for a socket library are utilized.

10. The mobile terminal of claim 1, further comprising
a middleware;
wherein the middleware provides access by an application developer to the access subsystem and to the application subsystem; and
wherein the functional split is hidden from the application developer via an application-programming interface.

11. The mobile terminal of claim 1, wherein capabilities of the access subsystem (307) are made available to the application subsystem (308) for use by applications executed via the application subsystem (308).

12. The mobile terminal of claim 1, wherein capabilities of the application subsystem (308) are made available to the access subsystem (307) for use by the access subsystem (307).

13. The mobile tenninal of claim 11 or 12, wherein the capabilities comprise at least one of hardware functionality and software functionality.

14. The mobile terminal of claim 1, wherein prioritization of data transmitted between the access subsystem (307) and the application subsystem (308) occurs via quality of service (QoS) provisioning.

15. The mobile terminal of claim 1, wherein the access subsystem (307) is adapted to be implemented without the application subsystem (308) in a telematics application.

16. The mobile terminal of claim 1, wherein the access subsystem (307) comprises at least one of a voice codec and a video codec and the application subsystem (308) is adapted to transparently access the at least one voice codec or video codec.

17. The mobile terminal of claim 1, wherein the access subsystem (307) comprises subscriber identity module (SIM) functionality and the application subsystem (308) is adapted to transparently access the SIM functionality of the access subsystem (307).

18. The mobile terminal of claim 1, wherein at least one of the access subsystem (307) and the application subsystem (308) comprises a voice compression library.

19. The mobile terminal of claim 1, wherein the mobile terminal comprises a global positioning system (GPS) module.

20. The mobile terminal of claim 19, wherein the GPS module is adapted to be used by the application subsystem (308), or
for assisted GPS location by the access subsystem (307).

21. A wireless-network access method comprising the steps of:
providing a mobile terminal, the mobile terminal comprising an application subsystem (308) and an access subsystem (307), the access subsystem (307) comprising at least one access-technology interface (306), and the application subsystem (308) inter-operably connected to the access subsystem (307) via the at least one access technology interface (306), wherein the application subsystem (308) and the access subsystem (307) are separated via a functional split; and
accessing, by the application subsystem (308), of a first wireless network via a first access-technology interface of at least one access-technology interface (306) of the access subsystem (307) **characterized in that** the access subsystem includes an interface (412) to a plurality of access-technology interfaces (418, 420, 422, 424, 426, 428) and that the access subsystem is adapted to operate as a gateway providing access to devices of a personal area network and to provide to said devices access to at least the plurality of access-technology-interfaces and/or the application subsystem.

22. The method of claim 21, further comprising providing a plurality of service components (312, 314), each of the plurality of service components (312, 314) being inter-operably connected to at least the access subsystem (307);
providing via the plurality of service components (312, 314), access to functionality required by the access subsystem (307) and the application subsystem (308).

23. The method of claim 21, further comprising providing programming access to the application subsystem and the access subsystem via middleware.

24. The wireless-network access method of claim 21, wherein at least one of the plurality of service components (312, 314) comprise one of separable hardware modules,
separable software modules, and
a combination of hardware components and software components.

25. The method of claim 21, wherein the accessing step comprises the access subsystem (307) and the application subsystem (308) communicating via the Internet Protocol.

26. The method of claim 21, further comprising an external device accessing (310), via the access subsystem (307), of a second wireless network via a second access-technology interface of the at least one access-technology interface (306).

27. The method of claim 26, wherein the external device accessing step comprises the access subsystem (307) inter-operably connecting the application subsystem (308) and the external device (310) to one another.

28. The method of claim 26, further comprising:
wherein the access provided by the access subsystem (307) via the second access-technology interface is within the personal area network; and
providing, by the access subsystem (307), of access by the external device (310) to a third wireless network, the third wireless network including an area outside the personal area network.

29. The method of claim 21, further comprising the access subsystem (307) serving as a wireless router to connect at least one external device (310) inter-operably connected to the access subsystem (307) to a second wireless network.

30. The method of claim 21, wherein the access subsystem (307) and the application subsystem (308) communicate via a sockets-based interface.

31. The method of claim 30, wherein a link-specific address and protocol family for a socket library are utilized.

32. The method of claim 21, further comprising
providing access by an aplication developer to the access subsystem (307) and to the application subsystem (308); and
wherein the functional split is hidden from the application developer via an application-programming interface.

33. The method of claim 21, further comprising providing capabilities of the access subsystem (307) to the application subsystem (308) for use by applications executed via the application subsystem (308).

34. The method of claim 33, wherein the capabilities comprise at least one of hardware functionality and software functionality.

35. The method of claim 21, further comprising providing capabilities of the application subsystem (308) to the access subsystem (307) for use by the access subsystem (307).

36. The method of claim 21, further comprising using a network management tool to configure and control functions provided by at least one of the access subsystem (307) and the application subsystem (308).

37. The method of claim 36, wherein the network management tool is in accordance with the Simple Network Management Protocol (SNMP).

38. The method of claim 21, further comprising prioritizing data transmitted between the access subsystem (307) and the application subsystem (308) via quality of service (QoS) provisioning.

39. The method of claim 21, wherein the access subsystem (307) comprises subscriber identity module (SIM) functionality and the application subsystem (308) is adapted to transparently access the SIM functionality of the access subsystem (307).

## Patentansprüche

1. Mobiles Endgerät, umfassend:
ein Zugriffsteilsystem (307), wobei das Zugriffsteilsystem (307) mindestens eine Zugriffstechnologieschnittstelle (306) umfasst;
ein Anwendungsteilsystem (308), das mit dem Zugriffsteilsystem (307) interoperabel verbunden ist, wobei die Verbindung die mindestens eine dem Zugriffsteilsystem (307) zugeordnete Zugriffstechnologieschnittstelle (306) aufweist;
wobei das Anwendungsteilsystem (308) und das Zugriffsteilsystem (307) durch eine Funktionsaufteilung getrennt sind;
wobei das Zugriffsteilsystem (307) dafür eingerichtet ist, Zugriff durch das Anwendungsteilsystem (308) auf ein erstes drahtloses Netzwerk über eine erste Zugriffstechnologieschnittstelle der mindestens einen Zugriffstechnologieschnittstelle (306) bereitzustellen, **dadurch gekennzeichnet, dass** das Zugriffsteilsystem eine Schnittstelle (412) zu einer Vielzahl von Zugriffstechnologieschnittstellen (418, 420, 422, 424, 426, 428) aufweist und dass das Zugriffsteilsystem dafür eingerichtet ist, als ein Gateway zu arbeiten, das Zugriff auf Vorrichtungen eines persönlichen Netzwerks bereitstellt, und den Vorrichtungen Zugriff auf mindestens die Vielzahl von Zugriffstechnologieschnittstellen und/oder das Anwendungsteilsystem bereitzustellen.

2. Mobiles Endgerät nach Anspruch 1, ferner umfassend eine Vielzahl von Dienstkomponenten (312, 314), die mindestens mit dem Zugriffsteilsystem (307) interoperabel verbunden sind;
wobei mindestens eine der Vielzahl von Dienstkomponenten (312, 314) dafür eingerichtet ist, Zugriff auf Funktionalität bereitzustellen, die durch das Zugriffsteilsystem (307) und das Anwendungsteilsystem (308) benötigt wird.

3. Mobiles Endgerät nach Anspruch 1, wobei Programmierzugriff auf das Anwendungsteilsystem (308) und das Zugriffsteilsystem (307) über Middleware ermöglicht wird.

4. Mobiles Endgerät nach Anspruch 1, wobei mindestens eine der Vielzahl von Dienstkomponenten (312, 314) eines von folgendem umfasst: abtrennbare Hardwaremodule, abtrennbare Softwaremodule und eine Kombination aus Hardwarekomponenten und Softwarekomponenten.

5. Mobiles Endgerät nach Anspruch 1, wobei Kommunikation zwischen dem Zugriffsteilsystem (307) und dem Anwendungsteilsystem (308) über das Internet-Protokoll erfolgt.

6. Mobiles Endgerät nach Anspruch 1, wobei das Zugriffsteilsystem (307) dafür eingerichtet ist, als drahtloser Router zu fungieren, der dafür eingerichtet ist, mindestens eine mit dem Zugriffsteilsystem (307) interoperabel verbundene externe Vorrichtung (310) mit einem zweiten drahtlosen Netzwerk zu verbinden.

7. Mobiles Endgerät nach Anspruch 6, wobei das Anwendungsteilsystem (308) und die mindestens eine externe Vorrichtung (310) miteinander über das Zugriffsteilsystem (307) interoperabel verbunden sind.

8. Mobiles Endgerät nach Anspruch 1, wobei das Zugriffsteilsystem (307) und das Anwendungsteilsystem (308) dafür eingerichtet sind, über eine socketgestützte Schnittstelle zu kommunizieren.

9. Mobiles Endgerät nach Anspruch 8, wobei eine übertragungsstreckenspezifische Adress- und Protokollfamilie für eine Socket-Bibliothek genutzt wird.

10. Mobiles Endgerät nach Anspruch 1, ferner umfassend:
eine Middleware;
wobei die Middleware Zugriff durch einen Anwendungsentwickler auf das Zugriffsteilsystem und auf das Anwendungsteilsystem bereitstellt; und
wobei die Funktionsaufteilung vor dem Anwendungsentwickler über eine Anwendungsprogrammierschnittstelle verborgen ist.

11. Mobiles Endgerät nach Anspruch 1, wobei Fähigkeiten des Zugriffsteilsystems (307) für das Anwendungsteilsystem (308) verfügbar gemacht werden, und zwar zur Nutzung durch Anwendungen, die über das Anwendungsteilsystem (308) ausgeführt werden.

12. Mobiles Endgerät nach Anspruch 1, wobei Fähigkeiten des Anwendungsteilsystems (308) für das Zugriffsteilsystem (307) zur Nutzung durch das Zugriffsteilsystem (307) verfügbar gemacht werden.

13. Mobiles Endgerät nach Anspruch 11 oder 12, wobei die Fähigkeiten mindestens eines von folgendem umfassen, nämlich Hardwarefunktionalität und Softwarefunktionalität.

14. Mobiles Endgerät nach Anspruch 1, wobei Prioritätensetzung von Daten, die zwischen dem Zugriffsteilsystem (307) und dem Anwendungsteilsystem (308) übertragen werden, über Dienstgüte-(QoS-)Festlegung erfolgt.

15. Mobiles Endgerät nach Anspruch 1, wobei das Zugriffsteilsystem (307) dafür eingerichtet ist, in einer Telematik-Anwendung ohne das Anwendungsteilsystem (308) implementiert zu werden.

16. Mobiles Endgerät nach Anspruch 1, wobei das Zugriffsteilsystem (307) mindestens eines von folgendem umfasst, nämlich einen Sprachcodec und einen Videocodec, und das Anwendungsteilsystem (308) dafür eingerichtet ist, transparent auf den mindestens einen Sprachcodec oder Videocodec zuzugreifen.

17. Mobiles Endgerät nach Anspruch 1, wobei das Zugriffsteilsystem (307) Teilnehmeridentitätsmodul-(SIM-)Funktionalität umfasst und das Anwendungsteilsystem (308) dafür eingerichtet ist, transparent auf die SIM-Funktionalität des Zugriffsteilsystems (307) zuzugreifen.

18. Mobiles Endgerät nach Anspruch 1, wobei mindestens eines von folgendem, nämlich das Zugriffsteilsystem (307) und das Anwendungsteilsystem (308), eine Sprachkomprimierungsbibliothek umfasst.

19. Mobiles Endgerät nach Anspruch 1, wobei das mobile Endgerät ein Modul für das Globale Positionsbestimmungssystem (GPS) umfasst.

20. Mobiles Endgerät nach Anspruch 19, wobei das GPS-Modul dafür eingerichtet ist, durch das Anwendungsteilsystem (308) oder zur unterstützten GPS-Standortbestimmung durch das Zugriffsteilsystem (307) verwendet zu werden.

21. Zugriffsverfahren für drahtlose Netzwerke, die folgenden Schritte umfassend:
Bereitstellen eines mobilen Endgeräts, wobei das mobile Endgerät ein Zugriffsteilsystem (307) und ein Anwendungsteilsystem (308) umfasst, wobei das Zugriffsteilsystem (307) mindestens eine Zugriffstechnologieschnittstelle (306) umfasst und das Anwendungsteilsystem (308) mit dem Zugriffsteilsystem (307) über die mindestens eine Zugriffstechnologieschnittstelle (306) interoperabel verbunden ist, wobei das Anwendungsteilsystem (308) und das Zugriffsteilsystem (307) durch eine Funktionsaufteilung getrennt sind; und
durch das Anwendungsteilsystem (308) über eine erste Zugriffstechnologieschnittstelle der mindestens einen Zugriffstechnologieschnittstelle (306) des Zugriffsteilsystems (307) erfolgendes Zugreifen auf ein erstes drahtloses Netzwerk, **dadurch gekennzeichnet, dass** das Zugriffsteilsystem eine Schnittstelle (412) zu einer Vielzahl von Zugriffstechnologieschnittstellen (418, 420, 422, 424, 426, 428) aufweist und dass das Zugriffsteilsystem dafür eingerichtet ist, als ein Gateway zu arbeiten, das Zugriff auf Vorrichtungen eines persönlichen Netzwerks bereitstellt, und den Vorrichtungen Zugriff auf mindestens die Vielzahl von Zugriffstechnologieschnittstellen und/oder das Anwendungsteilsystem bereitzustellen.

22. Verfahren nach Anspruch 21, ferner umfassend:
Bereitstellen einer Vielzahl von Dienstkomponenten (312, 314), wobei jede der Vielzahl von Dienstkomponenten (312, 314) mindestens mit dem Zugriffsteilsystem (307) interoperabel verbunden ist;
über die Vielzahl von Dienstkomponenten (312, 314) erfolgendes Bereitstellen von Zugriff auf Funktionalität, die durch das Zugriffsteilsystem (307) und das Anwendungsteilsystem (308) benötigt wird.

23. Verfahren nach Anspruch 21, ferner umfassend: Bereitstellen von Programmierzugriff auf das Anwendungsteilsystem und das Zugriffsteilsystem über Middleware.

24. Verfahren nach Anspruch 21, wobei mindestens eine der Vielzahl von Dienstkomponenten (312, 314) eines von folgendem umfasst: abtrennbare Hardwaremodule, abtrennbare Softwaremodule und eine Kombination aus Hardwarekomponenten und Softwarekomponenten.

25. Verfahren nach Anspruch 21, wobei der Zugriffsschritt umfasst: durch das Zugriffsteilsystem (307) und das Anwendungsteilsystem (308) erfolgendes Kommunizieren über das Internet-Protokoll.

26. Verfahren nach Anspruch 21, ferner umfassend: durch eine externe Vorrichtung (310) über das Zugriffsteilsystem (307) erfolgendes Zugreifen auf ein zweites drahtloses Netzwerk über eine zweite Zugriffstechnologieschnittstelle der mindestens einen Zugriffstechnologieschnittstelle (306).

27. Verfahren nach Anspruch 26, wobei der durch die externe Vorrichtung erfolgende Zugriffsschritt umfasst: durch das Zugriffsteilsystem (307) erfolgendes interoperables Miteinanderverbinden des Anwendungsteilsystems (308) und der externen Vorrichtung (310).

28. Verfahren nach Anspruch 26, wobei der durch das Zugriffsteilsystem (307) über die zweite Zugriffstechnologieschnittstelle bereitgestellte Zugriff innerhalb des persönlichen Netzwerks erfolgt; und ferner umfassend:
durch das Zugriffsteilsystem (307) erfolgendes Bereitstellen von Zugriff durch die externe Vorrichtung (310) auf ein drittes drahtloses Netzwerk, wobei das dritte drahtlose Netzwerk einen Bereich außerhalb des persönlichen Netzwerks einschließt.

29. Verfahren nach Anspruch 21, ferner umfassend: durch das Zugriffsteilsystem (307) erfolgendes Fungieren als drahtloser Router, um mindestens eine mit dem Zugriffsteilsystem (307) interoperabel verbundene externe Vorrichtung (310) mit einem zweiten drahtlosen Netzwerk zu verbinden.

30. Verfahren nach Anspruch 21, wobei das Zugriffsteilsystem (307) und das Anwendungsteilsystem (308) über eine socketgestützte Schnittstelle kommunizieren.

31. Verfahren nach Anspruch 30, wobei eine übertragungsstreckenspezifische Adress- und Protokollfamilie für eine Socket-Bibliothek genutzt wird.

32. Verfahren nach Anspruch 21, ferner umfassend:
Bereitstellen von Zugriff durch einen Anwendungsentwickler auf das Zugriffsteilsystem (307) und auf das Anwendungsteilsystem (308);
wobei die Funktionsaufteilung vor dem Anwendungsentwickler über eine Anwendungsprogrammierschnittstelle verborgen ist.

33. Verfahren nach Anspruch 21, ferner umfassend: Bereitstellen von Fähigkeiten des Zugriffsteilsystems (307) für das Anwendungsteilsystem (308) zur Nutzung durch Anwendungen, die über das Anwendungsteilsystem (308) ausgeführt werden.

34. Verfahren nach Anspruch 33, wobei die Fähigkeiten mindestens eines von folgendem umfassen, nämlich Hardwarefunktionalität und Softwarefunktionalität.

35. Verfahren nach Anspruch 21, ferner umfassend: Bereitstellen von Fähigkeiten des Anwendungsteilsystems (308) für das Zugriffsteilsystem (307) zur Nutzung durch das Zugriffsteilsystem (307).

36. Verfahren nach Anspruch 21, ferner umfassend: Verwenden eines Netzwerkverwaltungswerkzeugs, um Funktionen zu konfigurieren und zu steuern, die durch mindestens eines von folgendem bereitgestellt werden, nämlich das Zugriffsteilsystem (307) und das Anwendungsteilsystem (308).

37. Verfahren nach Anspruch 36, wobei das Netzwerkverwaltungswerkzeug dem Einfachen Netzwerkverwaltungsprotokoll (SNMP) entspricht.

38. Verfahren nach Anspruch 21, ferner umfassend: Setzen der Prioritäten von Daten, die zwischen dem Zugriffsteilsystem (307) und dem Anwendungsteilsystem (308) übertragen werden, über Dienstgüte-(QoS-)Festlegung.

39. Verfahren nach Anspruch 21, wobei das Zugriffsteilsystem (307) Teilnehmeridentitätsmodul-(SIM-)Funktionalität umfasst und das Anwendungsteilsystem (308) dafür eingerichtet ist, transparent auf die SIM-Funktionalität des Zugriffsteilsystems (307) zuzugreifen.

## Revendications

1. Terminal mobile comprenant :
un sous-système d'accès (307), le sous-système d'accès (307) comprenant au moins une interface de technologie d'accès (306),
un sous-système d'application (308) connecté de manière inter-fonctionnelle au sous-système d'accès (307), la connexion comprenant ladite au moins une interface de technologie d'accès (306) associée au sous-système d'accès (307) ;
dans lequel le sous-système d'application (308) et le sous-système d'accès (307) sont séparés par une séparation fonctionnelle ;
dans lequel le sous-système d'accès (307) est conçu pour fournir un accès par le sous-système d'application (308) à un premier réseau sans fil par l'intermédiaire d'une première interface de technologie d'accès de ladite au moins une interface de technologie d'accès (306), **caractérisé en ce que** le sous-système d'accès comprend une interface (412) vers une pluralité d'interfaces de technologie d'accès (418, 420, 422, 424, 426, 428) et **en ce que** le sous-système d'accès est conçu pour fonctionner en tant que passerelle fournissant un accès à des dispositifs d'un réseau personnel et pour fournir auxdits dispositifs un accès au moins à la pluralité d'interfaces de technologie d'accès et/ou au sous-système d'application.

2. Terminal mobile selon la revendication 1, comprenant en outre :
une pluralité de composants de service (312, 314), chacun de la pluralité de composants de service (312, 314) étant connecté de manière inter-fonctionnelle au moins au sous-système d'accès (307) ;
dans lequel au moins l'un de la pluralité de composants de service (312, 314) est conçu pour fournir un accès à une fonctionnalité nécessaire au sous-système d'accès (307) et au sous-système d'application (308).

3. Terminal mobile selon la revendication 1, dans lequel une programmation d'accès au sous-système d'application (308) et au sous-système d'accès (307) est permise via un logiciel intermédiaire.

4. Terminal mobile selon la revendication 1, dans lequel au moins l'un de la pluralité de composants de service (312, 314) comprend l'un de modules matériels séparables, de modules logiciels séparables, et d'une combinaison de composants matériels et de composants logiciels.

5. Terminal mobile selon la revendication 1, dans lequel les communications entre le sous-système d'accès (307) et le sous-système d'application (308) sont effectuées par l'intermédiaire du protocole Internet.

6. Terminal mobile selon la revendication 1, dans lequel le sous-système d'accès (307) est conçu pour servir de routeur sans fil qui est conçu pour connecter au moins un dispositif externe (310) connecté de manière inter-fonctionnelle au sous-système d'accès (307) à un deuxième réseau sans fil.

7. Terminal mobile selon la revendication 6, dans lequel le sous-système d'application (308) et ledit au moins un dispositif externe (310) sont connectés l'un à l'autre de manière inter-fonctionnelle par l'intermédiaire du sous-système d'accès (307).

8. Terminal mobile selon la revendication 1, dans lequel le sous-système d'accès (307) et le sous-système d'application (308) sont conçus pour communiquer par l'intermédiaire d'une interface à base de mécanismes d'échange.

9. Terminal mobile selon la revendication 8, dans lequel une adresse spécifique à une liaison et une famille de protocoles pour une bibliothèque de mécanismes d'échange sont utilisées.

10. Terminal mobile selon la revendication 1, comprenant en outre :
un logiciel intermédiaire ;
dans lequel le logiciel intermédiaire fournit un accès par un développeur d'application au sous-système d'accès et au sous-système d'application ; et
dans lequel la séparation fonctionnelle est cachée au développeur d'application par l'intermédiaire d'une interface de programmation d'application.

11. Terminal mobile selon la revendication 1, dans lequel les capacités du sous-système d'accès (307) sont mises à la disposition du sous-système d'application (308) pour une utilisation par des applications exécutées par l'intermédiaire du sous-système d'application (308).

12. Terminal mobile selon la revendication 1, dans lequel les capacités du sous-système d'application (308) sont mises à la disposition du sous-système d'accès (307) pour une utilisation par le sous-système d'accès (307).

13. Terminal mobile selon la revendication 11 ou 12, dans lequel les capacités comprennent au moins l'une d'une fonctionnalité matérielle et une fonctionnalité logicielle.

14. Terminal mobile selon la revendication 1, dans lequel l'établissement de la priorité des données transmises entre le sous-système d'accès (307) et le sous-système d'application (308) s'effectue par l'intermédiaire d'une prévision de qualité de service (QoS).

15. Terminal mobile selon la revendication 1, dans lequel le sous-système d'accès (307) est conçu pour être mis en oeuvre sans le sous-système d'application (308) dans une application télématique.

16. Terminal mobile selon la revendication 1, dans lequel le sous-système d'accès (307) comprend au moins l'un d'un codec vocal et d'un codec vidéo et le sous-système d'application (308) est conçu pour accéder de manière transparente audit au moins un codec vocal ou codec vidéo.

17. Terminal mobile selon la revendication 1, dans lequel le sous-système d'accès (307) comprend une fonctionnalité de module d'identité d'abonné (SIM) et le sous-système d'application (308) est conçu pour accéder de manière transparente à la fonctionnalité SIM du sous-système d'accès (307).

18. Terminal mobile selon la revendication 1, dans lequel au moins l'un du sous-système d'accès (307) et du sous-système d'application (308) comprend une bibliothèque de compression vocale.

19. Terminal mobile selon la revendication 1, dans lequel le terminal mobile comprend un module de système de positionnement mondial (GPS).

20. Terminal mobile selon la revendication 19, dans lequel le module GPS est conçu pour être utilisé par le sous-système d'application (308), ou pour une localisation GPS assistée par le sous-système d'accès (307).

21. Procédé d'accès à un réseau sans fil comprenant les étapes consistant à :
prévoir un terminal mobile, le terminal mobile comprenant un sous-système d'application (308) et un sous-système d'accès (307), le sous-système d'accès (307) comprenant au moins une interface de technologie d'accès (306), et le sous-système d'application (308) étant connecté de manière inter-fonctionnelle au sous-système d'accès (307) par l'intermédiaire de ladite au moins une interface de technologie d'accès (306), dans lequel le sous-système d'application (308) et le sous-système d'accès (307) sont séparés par l'intermédiaire d'une séparation fonctionnelle ; et
accéder, par le sous-système d'application (308), à un premier réseau sans fil par l'intermédiaire d'une première interface de technologie d'accès d'au moins une interface de technologie d'accès (306) du sous-système d'accès (307), **caractérisé en ce que** le sous-système d'accès comprend une interface (412) vers une pluralité d'interfaces de technologie d'accès (418, 420, 422, 424, 426, 428) et **en ce que** le sous-système d'accès est conçu pour fonctionner en tant que passerelle fournissant un accès à des dispositifs d'un réseau personnel et pour fournir auxdits dispositifs un accès au moins à la pluralité d'interfaces de technologie d'accès et/ou au sous-système d'application.

22. Procédé selon la revendication 21, consistant en outre à :
prévoir une pluralité de composants de service (312, 314), chacun de la pluralité de composants de service (312, 314) étant connecté de manière inter-fonctionnelle au moins au sous-système d'accès (307) ;
fournir, par l'intermédiaire de la pluralité de composants de service (312, 314), un accès à une fonctionnalité nécessaire au sous-système d'accès (307) et au sous-système d'application (308).

23. Procédé selon la revendication 21, consistant en outre à fournir un accès de programmation au sous-système d'application et au sous-système d'accès via un logiciel intermédiaire.

24. Procédé d'accès à un réseau sans fil selon la revendication 21, dans lequel au moins l'un de la pluralité de composants de service (312, 314) comprend l'un de modules matériels séparables, de modules logiciels séparables, et d'une combinaison de composants matériels et de composants logiciels.

25. Procédé selon la revendication 21, dans lequel l'étape d'accès comprend la communication du sous-système d'accès (307) et du sous-système d'application (308) par l'intermédiaire du protocole Internet.

26. Procédé selon la revendication 21, consistant en outre en ce qu'un dispositif externe (310) accède, par l'intermédiaire du sous-système d'accès (307), à un deuxième réseau sans fil par l'intermédiaire d'une deuxième interface de technologie d'accès de ladite au moins une interface de technologie d'accès (306).

27. Procédé selon la revendication 26, dans lequel l'étape d'accès d'un dispositif externe comprend la connexion inter-fonctionnelle, par le sous-système d'accès (307), du sous-système d'application (308) et du dispositif externe (310) l'un à l'autre.

28. Procédé selon la revendication 26, consistant en outre à :
fournir l'accès par le sous-système d'accès (307) par l'intermédiaire de la deuxième interface de technologie d'accès dans le réseau personnel ; et
fournir, par le sous-système d'accès (307), un accès par le dispositif externe (310) à un troisième réseau sans fil, le troisième réseau sans fil comprenant une zone à l'extérieur du réseau personnel.

29. Procédé selon la revendication 21, consistant en outre en ce que le sous-système d'accès (307) sert de routeur sans fil pour connecter au moins un dispositif externe (310) connecté de manière inter-fonctionnelle au sous-système d'accès (307) à un deuxième réseau sans fil.

30. Procédé selon la revendication 21, dans lequel le sous-système d'accès (307) et le sous-système d'application (308) communiquent par l'intermédiaire d'une interface à base de mécanismes d'échange.

31. Procédé selon la revendication 30, dans lequel une adresse spécifique à une liaison et une famille de protocoles pour une bibliothèque de mécanismes d'échange sont utilisées.

32. Procédé selon la revendication 21, consistant en outre à :
fournir un accès par un développeur d'application au sous-système d'accès (307) et au sous-système d'application (308) ; et
dans lequel la séparation fonctionnelle est cachée au développeur d'application par l'intermédiaire d'une interface de programmation d'application.

33. Procédé selon la revendication 21, consistant en outre à fournir les capacités du sous-système d'accès (307) au sous-système d'application (308) pour une utilisation par des applications exécutées par l'intermédiaire du sous-système d'application (308).

34. Procédé selon la revendication 33, dans lequel les capacités comprennent au moins l'une d'une fonctionnalité matérielle et d'une fonctionnalité logicielle.

35. Procédé selon la revendication 21, consistant en outre à fournir les capacités du sous-système d'application (308) au sous-système d'accès (307) pour une utilisation par le sous-système d'accès (307).

36. Procédé selon la revendication 21, consistant en outre à utiliser un outil de gestion de réseau pour configurer et commander les fonctions fournies par au moins l'un du sous-système d'accès (307) et du sous-système d'application (308).

37. Procédé selon la revendication 36, dans lequel l'outil de gestion de réseau est conforme au protocole de gestion de réseau simple (SNMP).

38. Procédé selon la revendication 21, consistant en outre à établir la priorité des données transmises entre le sous-système d'accès (307) et le sous-système d'application (308) par la prévision d'une qualité de service (QoS).

39. Procédé selon la revendication 21, dans lequel le sous-système d'accès (307) comprend une fonctionnalité de module d'identité d'abonné (SIM) et le sous-système d'application (308) est conçu pour accéder de manière transparente à la fonctionnalité SIM du sous-système d'accès (307).
